# EUROPÄISCHE PATENTANMELDUNG

(11) **EP 1 276 063 A1**
(43) Veröffentlichungstag der Anmeldung: **15.01.2003**
(21) Anmeldenummer: 02014012.5
(22) Anmeldetag: 27.06.2002
(51) Int. Cl.: G06F 17/60

(54) **Computersystem und Verfahren zur automatischen Ermittlung eines Kundenpreises**

(30) Priorität: 10.07.2001 DE 10133370
(71) Anmelder: Bayer Aktiengesellschaft, 51368 Leverkusen (DE)
(72) Erfinder: Alzer, Bernhard, 51069 Köln (DE); Zander, Klaus, Dr., 45478 Mülheim/Ruhr (DE); Enewoldsen, Patric, Dr., 51399 Burscheid (DE); Harder, Joachim, 119048 Moskau (RU)

(57) **Zusammenfassung**

Ein Computersystem und Verfahren zur automatischen Ermittlung eines Kunden-Preises erlaubt die Ermittlung eines Kunden-Preises für eine Bestellung mit Bestellparametern, auch wenn eine solche Bestellung zuvor von dem Kunden noch nicht getätigt worden ist. Dazu wird eine ähnliche Bestellung aus einer Kunden-Historie ermittelt und aufgrund der Abweichung der früheren ähnlichen Bestellung von einem Standardpreis der Kunden-Preis für die neue Bestellung ermittelt.

## Beschreibung

Die Erfindung betrifft ein Computersystem und Verfahren zur automatischen Ermittlung eines Kunden-Preises.

Aus dem Stand der Technik ist es bekannt Produkte und Dienstleistungen auf elektronischem Wege, beispielsweise über das Internet, anzubieten, zu bewerben und zu verkaufen. Dies trifft gleichermaßen für an den Endverbraucher gerichtete Angebote, insbesondere für den sogenannten "business to consumer" Bereich, wie auch auf den Handel zwischen Institutionen, insbesondere für den sogenannten "business to business" Bereich, zu.

Zum Beispiel benutzen Banken, Vertreiber von Konsumartikeln, Unternehmen der Telekommunikation und der Elektronik oder die Automobilindustrie das Internet für sogenannte E-Business-Plattformen oder Portale, zum Angebot der betreffenden Produkte und / oder Dienstleistungen.

Eine besonders wichtige Rolle spielt die Einrichtung solcher E-Business-Plattformen für die chemische Industrie, da die weitgehende Automatisierung der Warenlieferkette zu deutlichen Kostensenkungen führen wird. Dabei unterscheidet man zwischen Firmenportalen (beispielsweise KU Portal, BayerONE), Marktplätze (z.B. Omnexus) und Einkaufsplattformen (z.B. Covisint).

Weitere Beispiele für solche E-Business-Plattformen sind CC-MARKETS und "Elemica". Bei Elemica handelt es sich um eine Gründung von zweiundzwanzig der weltweit größten Chemiefirmen; über diesen Marktplatz können Grund-, Spezialund Feinchemikalien bestellt werden.

In der chemischen Industrie ist ein solcher Marktplatz besonders vorteilhaft.

Dies trifft gleichermaßen für den Waren-Austausch zwischen Chemie-Firmen zu als auch hinsichtlich des Verkaufs an Abnehmer außerhalb der chemischen Industrie. Ein entsprechendes Plateau von Funktionen stellt einen Katalog der Produkte sowie Funktionen zur Kontrakt-Abwicklung und zum Abruf der vereinbarten Lieferung zum entsprechenden Zeitpunkt zur Verfügung. Zusätzlich sollen Transportplanungen und Lagerhaltung gleichzeitig elektronisch gesteuert werden. Dies sind Funktionen, die gerade im Handel mit Chemikalien von großer Bedeutung sind.

Zur Ermittlung des Kunden-Preises im Online Handel gibt es im Stand der Technik grundsätzlich zwei automatische Möglichkeiten:
i) mit dem Kunden wurde zuvor ein kundenspezifischer Preis für das bestellte Produkt ausgehandelt. Dieser ist einem Kunden-Preisregister hinterlegt. Bei einer Online Bestellung des entsprechenden Produkts wird auf den in dem Kunden-Preisregister hinterlegten Kunden-Preis zugegriffen.
ii) Für den Fall, dass es für das bestellte Produkt keinen zuvor ausgehandelten Kunden-Preis gibt, der in dem Kunden-Preisregister abgelegt ist, wird zur Preisfindung ein Standardpreis verwendet.

Die Preisfindung über den Standardpreis hat den Nachteil, dass dieser entweder den Erwartungen des Kunden nicht gerecht wird oder so niedrig angesetzt sein muss, dass Renditemöglichkeiten verloren gehen.

Der Erfindung liegt daher die Aufgabe zu Grunde, ein verbessertes Computersystem und Verfahren zur automatischen Ermittlung eines Kunden-Preises zu schaffen.

Die der Erfindung zu Grunde liegende Aufgabe wird jeweils mit den Merkmalen der unabhängigen Patentansprüche gelöst. Bevorzugte Weiterbildungen der Erfindung sind in den Unteransprüchen angegeben.

Die Erfindung erlaubt die automatische Ermittlung eines Kunden-Preises für ein Produkt oder eine Dienstleistung, die zuvor in gleicher Form von dem Kunden noch nicht bestellt worden ist und für die kein zuvor ausgehandelter Preis vorliegt. Dies erlaubt die automatische Abwicklung von Bestellungen mit unterschiedlichen Bestellparametern über das Internet, ohne dass das zeit- und kostenintensive Einschalten eines Vertriebsbeauftragten zur Aushandlung eines Kunden-Preises erforderlich wäre.

Ein besonderer Vorteil der Erfindung liegt darin, dass trotz der automatischen Ermittlung des Kunden-Preises der Erwartungshorizont des Kunden hinsichtlich des Preises mit hoher Wahrscheinlichkeit getroffen werden kann und gleichzeitig die Rendite des Herstellers optimiert wird.

Die Erfindung erlaubt somit die schnelle Beantwortung einer Preisanfrage in Realtime auch für Produkte, welche von dem Kunden zuvor noch nicht bestellt worden sind. Der Preisfindungsprozess wird somit stark rationalisiert, ohne auf einen kunden-individuellen Preis verzichten zu müssen.

Im Weiteren wird ein bevorzugtes Ausführungsbeispiel der Erfindung mit Bezug auf die Zeichnung näher erläutert. Es zeigen:
- Fig. 1: ein Flussdiagramm einer Ausführungsform des erfindungsgemäßen Verfahrens,
- Fig. 2: eine Weiterbildung des Verfahrens der Fig. 1,
- Fig. 3: ein Computersystem zur Ausführung des Verfahrens.

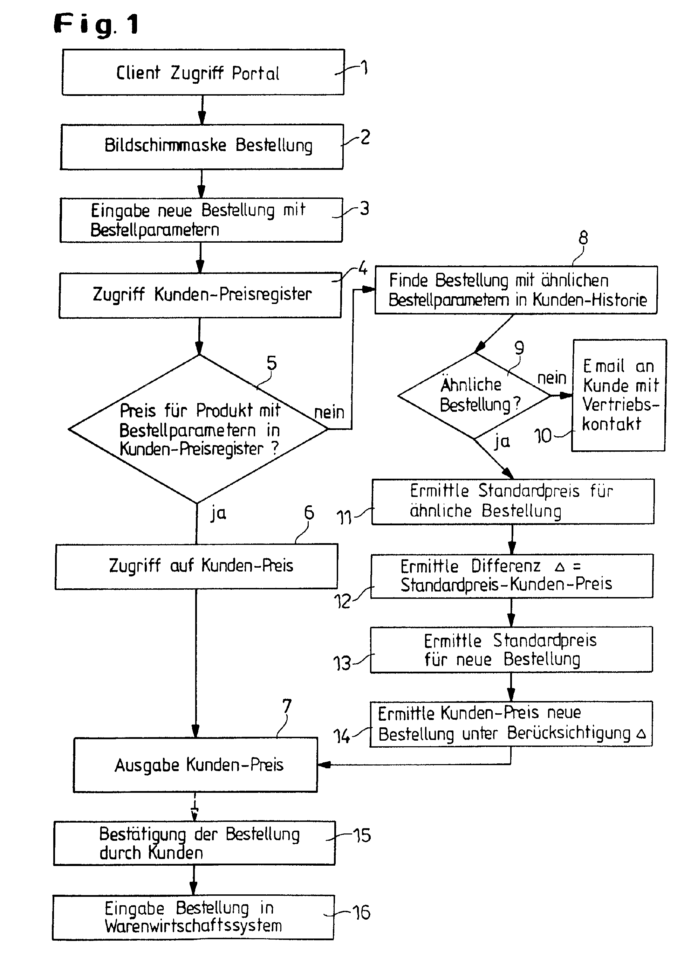

In dem Flussdiagramm der Fig. 1 erfolgt in dem Schritt 1 ein Zugriff eines Kunden auf ein E-Business-Portal. Der Kunde bedient sich dazu eines Client Computers, der über ein Computernetzwerk, beispielsweise das Internet, auf einen Servercomputer zugreift, auf dem die Web-Site des Portals implementiert ist.

In dem Schritt 2 erfolgt die Anzeige einer Bildschirmmaske zur Eingabe einer Bestellung und/oder Preisanfrage mit bestimmten Bestellparametern auf dem Bildschirm des Client Computers. In dem Schritt 3 gibt der Kunde die neue Bestellung und/oder Preisanfrage mit den entsprechenden Bestellparametern ein.

Diese Bestellung und/oder Preisanfrage mit den Bestellparametern wird zu dem Servercomputer übertragen. Der Servercomputer greift dann in dem Schritt 4 auf ein Kunden-Preisregister zu, um in dem Schritt 5 zu prüfen, ob in dem Kunden-Preisregister bereits ein zuvor mit dem Kunden ausgehandelter Preis für das entsprechende Produkt mit den Bestellparametern abgelegt ist. Wenn dies der Fall ist, wird in dem Schritt 6 auf diesen Kunden-Preis zugegriffen und dieser Kunden-Preis zu dem Client-Computer übertragen, so dass dieser in dem Schritt 7 auf dem Bildschirm des Client Computers ausgegeben wird.

Wenn in dem Schritt 5 entschieden wird, dass kein Kunden-Preis in dem Kunden-Preisregister für die neue Bestellung mit den Bestellparametern vorhanden ist, geht die Ablaufsteuerung zu dem Schritt 8, um eine ähnliche Bestellung in einer Kunden-Historie zu finden, die ähnliche Bestellparameter aufweist. In dem Schritt 9 wird geprüft, ob eine solche ähnliche frühere Bestellung in der Kunden-Historie vorhanden ist. Ist dies nicht der Fall, so wird in dem Schritt 10 eine Nachricht, beispielsweise ein E-Mail, an den Kunden und Vertriebsbeauftragten generiert. Die Nachricht enthält einen Vertriebskontakt, beispielsweise die Telefonnummer eines Vertriebsbeauftragten. Der Kunde kann dann den Vertriebsbeauftragten anrufen, um den Kunden-Preis individuell auszuhandeln. Alternativ oder zusätzlich wird eine Nachricht mit allen Auftragsinformationen an den Vertriebsbeauftragten gesendet, so dass der Vertriebsbeauftragte den Kunden zur Aushandlung des Preises kontaktieren kann.

Wenn dagegen in dem Schritt 9 entschieden wird, dass eine ähnliche Bestellung in der Kunden-Historie vorliegt, wird in dem Schritt 11 der Standardpreis für die frühere ähnliche Bestellung durch einen entsprechenden Datenbankzugriff mit den Bestellparametern ermittelt.

In dem Schritt 12 wird dann die Differenz zwischen dem in dem Schritt 11 ermittelten Standardpreis und dem Kunden-Preis der ähnlichen Bestellung aus der Kunden-Historie ermittelt.

In dem Schritt 13 wird der Standardpreis für die neue Bestellung mit den entsprechenden Bestellparametern durch einen Datenbankzugriff ermittelt. Im Schritt 14 wird schließlich der kunden-individuelle Preis der neuen Bestellung unter Berücksichtigung der in dem Schritt 12 ermittelten Differenz bestimmt.

Dazu kann beispielsweise die in dem Schritt 12 ermittele Differenz von dem in dem Schritt 13 ermittelten Standardpreis für die neue Bestellung abgezogen werden. Ferner können dabei weitere kundenspezifische Parameter, wie beispielsweise eine kundenspezifische Preisdegression in Abhängigkeit von der Bestellmenge, der Gesamtbestellmenge und/oder der Jahresbestellmenge, sowie der Region und/oder der Branche berücksichtigt werden.

Wenn die aus der Kunden-Historie ermittelte ähnliche Bestellung schon einen längeren Zeitraum zurück liegt, in dem ein oder mehrere Preisanpassungen der Standardpreise erfolgt sind, ist es vorteilhaft, den tatsächlichen Kunden-Preis aus der Kunden-Historie für die ähnliche frühere Bestellung entsprechend der prozentualen Änderung der Standardpreise für die Bildung der Differenz in dem Schritt 12 anzupassen, um den früheren Kunden-Preis auf die aktuellen Preisverhältnisse zu beziehen.

Nach Ermittlung des Kunden-Preises in dem Schritt 14 wird dieser von dem Servercomputer an den Client Computer übertragen und dort wiederum in dem Schritt 7 auf dem Bildschirm des Client Computers angezeigt.

In dem Schritt 15 kann der Kunde die Bestellung mit dem in dem Schritt 7 aufgegebenen Kunden-Preis bestätigen. Dies kann Online, beispielsweise durch Klicken auf einen "OK-Button" zur Eingabe der Bestätigung und Übertragung der Bestätigung an den Servercomputer erfolgen.

In dem Schritt 16 erfolgt die Eingabe der Bestellung serverseitig in ein Warenwirtschaftssystem zur automatischen Abwicklung der Lieferung, Zahlung usw.. Hierzu kann beispielsweise ein Warenwirtschaftssystem der Firma SAP AG, beispielsweise SAP-R3, eingesetzt werden.

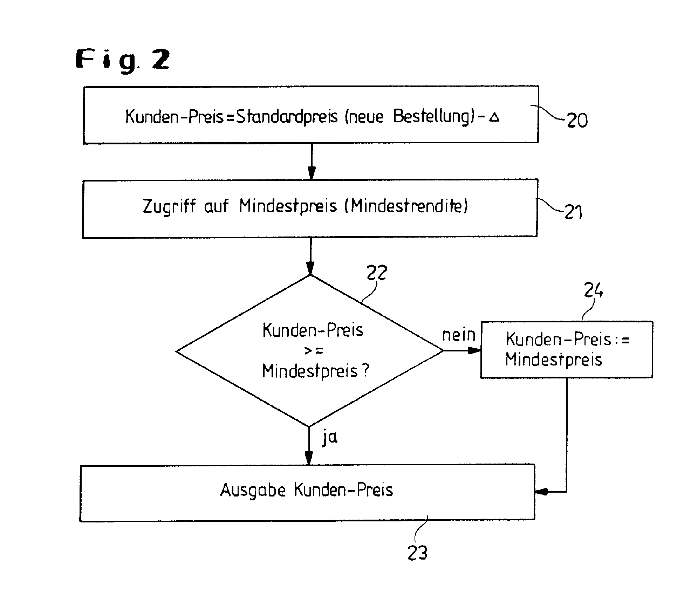

Die Fig. 2 zeigt eine Weiterbildung des Verfahrens der Fig. 1, in dem sichergestellt wird, dass mit dem automatisch ermittelten Kunden-Preis eine Mindestrendite erzielt wird. Dazu wird in dem Schritt 20, der dem Schritt 14 der Fig. 1 entspricht, zunächst der Kunden-Preis aus dem Standardpreis der neuen Bestellung (vgl. Schritt 13 der Fig. 1) durch Subtraktion der Differenz zwischen Standardpreis und Kunden-Preis der früheren Bestellung (vgl. Schritt 12 der Fig. 1) ermittelt.

In dem Schritt 21 wird ein Mindestpreis für die neue Bestellung mit den Bestellparametern zur Erzielung einer Mindestrendite ermittelt. Dies kann durch eine in ein entsprechendes betriebswirtschaftliches Informationssystem integrierter Berechnungsvorschrift erfolgen.

In dem Schritt 22 wird sodann der Kunden-Preis des Schritts 20 mit dem Mindestpreis des Schritts 21 verglichen.

Wenn der Kunden-Preis des Schritts 20 größer oder gleich dem Mindestpreis des Schritts 21 ist, so handelt es sich bei dem Kunden-Preis des Schritts 20 zugleich um den entgültigen Kundenpreis, der in dem Schritt 23 ausgegeben wird.

Liegt dagegen der Kunden-Preis des Schritts 20 unter dem Mindestpreis, so wird der Kunden-Preis in dem Schritt 24 auf den Mindestpreis gesetzt, um die Erzielung der Mindestrendite zu gewährleisten. Danach erfolgt wiederum die Ausgabe des Kunden-Preises des Schritts 24 in dem Schritt 23.

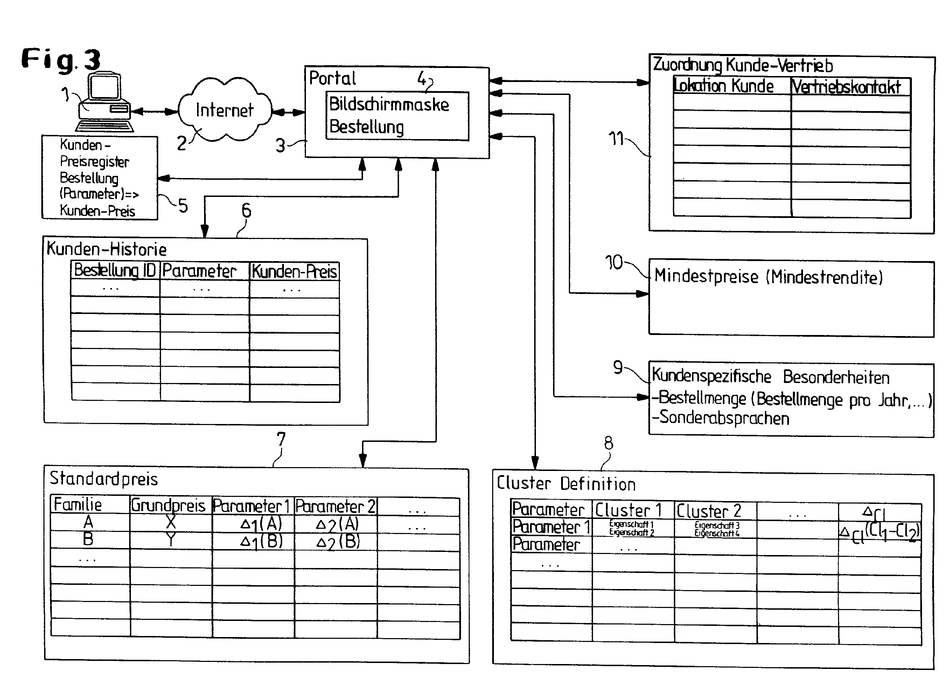

Die Fig. 3 zeigt ein erfindungsgemäßes Computersystem mit einem Client Computer 1, der über das Internet 2 auf ein E-Business-Portal 3 eines Servercomputers zugreifen kann. Das Portal 3 hat eine Bildschirmmaske 4, die durch den Zugriff des Client Computers 1 über das Internet 2 auf den Servercomputer zu dem Client Computer 1 übertragbar ist, so dass ein Kunde in die Bildschirmmaske 4 eine Bestellung mit den dazugehörigen Bestellparametern eingeben kann.

Das Portal 3 ist ferner über den entsprechenden Servercomputer mit dem Kunden-Preisregister 5 verbunden. In dem Kunden-Preisregister sind die Kunden-Preise für vordefinierte Bestellungen mit bestimmten Bestellparametern abgelegt. Erfolgt die Eingabe einer Bestellung mit Bestellparametern, für die ein Preis in dem Kunden-Preisregister vorhanden ist, so kann dieser Preis aus dem Kunden-Preisregister 5 abgerufen und zu dem Client Computer 1 übertragen werden. Dies ist beispielsweise dann der Fall, wenn Kunden-Preise für bestimmte Standardbestellungen mit dem Kunden zuvor individuell ausgehandelt worden sind.

Das Portal 3 steht ferner mit einer Datenbank 6 in Verbindung. Die Datenbank 6 speichert die Kunden-Historie. Ein Eintrag in der Kunden-Historie besteht aus der Identifikationsnummer "ID" der Bestellung, den Bestellparametern und dem entsprechenden Kunden-Preis.

Ferner ist das Portal 3 mit einer Datenbank 7 zur Ermittlung des Standardpreises verbunden. Die Datenbank 7 beinhaltet für verschiedene Produktfamilien A, B ... die jeweiligen Grundpreise X, Y.... In Abhängigkeit der Bestellparameter (Parameter 1, Parameter 2 ...) beinhaltet die Datenbank 7 Abweichungen von dem Grundpreis. Für das Beispiel der Produktfamilie A und dem entsprechenden Grundpreis X sind dies die Abweichungen Δ₁(A) bzw. Δ₂(A) für die Parameter 1 bzw. 2. Die Abweichungen für die weiteren Parameter sind in der Fig. 3 nicht dargestellt. Entsprechend sind in der Datenbank 7 die Abweichungen Δ₁(B) und Δ₂(B) für die Parameter 1 bzw. 2 mit Bezug auf die Produktfamilie B und deren Grundpreis Y beinhaltet.

Das Portal 3 ist ferner mit einer Datenbank 8 verbunden. Die Datenbank 8 hat für jeden der Parameter (Parameter 1, Parameter 2, ...) einen Eintrag. Jeder der Parameter kann unterschiedliche Instanzen annehmen, beispielsweise Eigenschaften oder Zahlenwerte. Solche Eigenschaften oder Bereiche von Zahlenwerten werden unterschiedlichen Clustern (Cluster 1, Cluster 2, ...) zugeordnet. Beispielsweise sind die Instanzen "Eigenschaft 1" und "Eigenschaft 2" des Parameters 1 dem Cluster 1 zugeordnet, während die Eigenschaften "Eigenschaft 3" und "Eigenschaft 4" des Parameters 1 dem entsprechenden Cluster 2 zugeordnet sind.

Ferner enthält jeder Eintrag in der Datenbank 8 zumindest eine Gewichtung Δ_{CL} zur Gewichtung einer Abweichung eines Parameters. Ist beispielsweise eine erste Parameterinstanz dem Cluster 1 zugeordnet und eine andere Parameterinstanz dem Cluster 2, so ist die Gewichtung der Abweichung der Parametereigenschaften durch den Datenbankeintrag Δ_{CL}(CL1-CL₂) gegeben. Wenn mehr als zwei Cluster für einen bestimmten Parameter festgelegt sind, so kann die Datenbank 8 die Gewichtungen für alle Permutationen der Abweichungen zwischen Clustern beinhalten.

Mit Hilfe der Datenbank 8 kann die Ähnlichkeit zweier Bestellungen festgestellt werden. Wenn beispielsweise die entsprechenden Instanzen des Parameters 1 unterschiedlichen Clustern zugehören, so wird diese Abweichung mit der entsprechenden Gewichtung Δ_{CL}(CL1-CL2) bewertet. Entsprechend wird für die weiteren Parameter verfahren. Die entsprechenden Gewichtungen der Abweichungen hinsichtlich der Zuordnung von Instanzenparametern zu Clustern können dann summiert werden. Die summierten Gewichtungen stellen dann ein Maß für die Ähnlichkeit der Clusterprofile der zu vergleichenden Bestellungen dar. Überschreitet die Summe der Gewichtungen einen bestimmten Wert, so werden die verglichenen Bestellungen als unähnlich betrachtet; unterschreiten die summierten Gewichtungen dagegen den vorbestimmten Wert, so handelt es sich um ähnliche Bestellungen.

Das Portal 3 ist ferner mit einer Datenbank 9 verbunden. Die Datenbank 9 beinhalten kundenspezifische Besonderheiten, beispielsweise kundenspezifische Absprachen hinsichtlich der Preisfindung. Beispielsweise kann mit dem Kunden eine besondere Preisdegression in Abhängigkeit der Bestellmenge, der Bestellmenge eines bestimmten Produkts pro Jahr oder der Gesamtbestellmenge vereinbart worden sein.

Das Portal 3 ist ferner mit dem Modul 10 zur Ermittlung eines Mindestpreises zur Erreichung einer Mindestrendite verbunden. Bei dem Modul 10 kann es sich um eine in ein betriebswirtschaftliches Informationssystem integrierte Berechnungsvorschrift handeln.

Ferner ist das Portal 3 mit einer Datenbank 11 verbunden. In der Datenbank 11 ist eine Zuordnung zwischen der Lokation des Kunden und einem entsprechenden Vertriebskontakt gespeichert. Der Vertriebskontakt kann beispielsweise aus Kontaktinformationen des Vertriebsbeauftragten für das Gebiet, in dem der Kunde seinen Sitz hat, bestehen.

Wenn der Kunde eine Bestellung in die Bildschirmmaske 4 über den Client Computer 1 eingibt, so werden die entsprechenden Daten zu dem Portal 3 übertragen. Das Portal 3 prüft dann zunächst, ob eine Bestellung mit den entsprechenden Parametern in dem Kundenpreisregister 5 abgelegt ist und ermittelt gegebenenfalls den Kunden-Preis aus dem Kunden-Preisregister 5.

Wenn hingegen keine solche Bestellung in dem Kunden-Preisregister 5 abgelegt ist, greift das Portal 3 auf die Datenbank 6 zu, um eine ähnliche Bestellung aus der Kunden-Historie zu ermitteln. Dazu wird für einen Kandidaten für eine ähnliche Bestellung zunächst mittels der Datenbank 8 ein entsprechendes Cluster-Profil generiert, dass heißt die Instanzen der Parameter der früheren Bestellung werden den entsprechenden Clustern zugeordnet. Aus der Zuordnung von Parameterinstanzen zu Clustern ergibt sich dann das Cluster-Profil. Entsprechend wird mit der neuen Bestellung und den vom Kunden bei der Eingabe über die Bildschirmmaske 4 instanziierten Parameterwerten verfahren. Dabei kann eine ähnliche Bestellung aus der Kunden-Historie mit dem selben Cluster-Profil ermittelt werden.

Wenn eine solche ähnliche Bestellung mit demselben Cluster-Profil nicht auffindbar ist, können hinsichtlich des Kandidaten für die ähnliche Bestellung und der Bestellung die Summe der Gewichtungen der Abweichungen gebildet werden, um so zu einer Entscheidung hinsichtlich der Ähnlichkeit bzw. der Unähnlichkeit zu kommen.

Wenn eine ähnlichen Bestellung aus der Kunden-Historie nicht ermittelt werden kann, erfolgt ein Zugriff auf die Datenbank 11, um eine Zuordnung des Kunden zu einem Vertriebskontakt abzufragen. Daraufhin kann automatisch eine Nachricht generiert werden, um den Kunden zu bitten, für den Zweck der Aushandlung eines Kunden-Preises mit einem Vertriebsbeauftragten z.B. telefonisch Kontakt aufzunehmen. Diese Nachricht kann an den Kunden von dem Portal 3 über das Internet 2 zu dem Client Computer 1 per E-Mail geschickt werden. Diese Nachricht kann auch einen aus der Datenbank 7 ermittelten Preis beinhalten und dem Kunden freistellen, ob er den Standardpreis akzeptieren möchte oder ob er die Kontaktaufnahme mit einem Vertriebsbeauftragten zur Aushandlung eines individuellen Preises bevorzugt.

Alternativ oder zusätzlich wird eine Nachricht an den Vertriebsbeauftragten gesendet mit allen Auftragsinformationen, so dass der Vertriebsbeauftragte den Kunden zur Aushandlung des Preises kontaktieren kann.

Lässt sich hingegen eine ähnliche Bestellung aus der Kunden-Historie ermitteln, so wird für die ähnliche Bestellung aus der Datenbank 7 der Standardpreis unter Berücksichtigung der Instanzen der Parameter der betreffenden ähnlichen Bestellung ermittelt. Danach wird die Differenz zwischen dem Standardpreis und dem Kunden-Preis der ähnlichen Bestellung gebildet. Liegt die ähnliche Bestellung schon einige Zeit zurück, so kann der Kunden-Preis der früheren ähnlichen Bestellung entsprechend der Preisentwicklung angepasst werden.

Danach erfolgt die Ermittlung des Standardpreises aufgrund der Datenbank 7 für die neue Bestellung. Von diesem Standardpreis wird die zuvor ermittelte Differenz abgezogen. Ferner kann auf die Datenbank 9 zugegriffen werden, um weitere kundenspezifische Besonderheiten, beispielsweise weitere Preisnachlässe, zu berücksichtigen. Der so ermittelte Kunden-Preis wird sodann mit einem aus dem Modul 10 ermittelten Mindestpreis verglichen. Liegt der Kunden-Preis über dem Mindestpreis, so wird dieser Preis zu dem Client Computer 1 übertragen; ist das Gegenteil der Fall, so wird der Mindestpreis übertragen.

Bei den Parametern einer Bestellung kann es sich für den Fall der technischen Thermoplaste der Firma Bayer AG beispielsweise um Folgendes handeln:
- Parameter 1 = Familie:: Apec HT, Makrolon, Makrofol/Bayfol, Lustran ABS/Novodur, Lustran SAN, Bayblend, Triax, Centrex/Cadon, Durethan, Pocan, BAK, Desmopan/Texin.
- Parameter 2 = Typ:: Typen für Apec HT: ....... Typen für Durethan: unverstärkte Spritzgießtypen, verstärkte Spritzgießtypen, Standardspritzgießtypen, flammgeschützte Spritzgießtypen, schlagzäh modifizierte Spritzgießtypen, transparente Spritzgießtypen, Glasfaser, Glasfaser flammgeschützt, Glasfaser schlagzäh modifiziert, Glasfaser reduzierte Wasseraufnahme, Mineral gefüllt, Mineral flammgeschützt, Mineral schlagzäh modifiziert, Hüllstoff und Glasfaser, Hüllstoff und Glaserfaser flammgeschützt. .......
- Parameter 3 = Varianten: .....: Variante für Durethan Standardspritzgießtypen: wärmestabilisiert, zusätzlich nukleiert, höhere Zähigkeit ....

Parameter 4 = Farbe
Parameter 5 = Verpackung
Parameter 6 = Region
Parameter 7 = Branche
Parameter 8 = Bestellmenge

### Bezugszeichenliste

- Client Computer: 1
- Internet: 2
- Portal: 3
- Bildschirmmaske: 4
- Kunden-Preisregister: 5
- Datenbank: 6
- Datenbank: 7
- Datenbank: 8
- Datenbank: 9
- Modul: 10
- Datenbank: 11

## Patentansprüche

1. Verfahren zur automatischen Ermittlung eines Kunden-Preises für eine Bestellung mit Bestellparametern, mit folgenden Schritten:
- Suche nach einer früheren Bestellung mit ähnlichen Bestellparametern,
- Ermittlung eines Standardpreises für die ähnliche Bestellung,
- Ermittlung der Abweichung des tatsächlichen Preises der ähnlichen Bestellung von dem Standardpreis der ähnlichen Bestellung,
- Ermittlung des Standardpreises für die Bestellung,
- Ermittlung des Kunden-Preises für die Bestellung unter Berücksichtigung der Abweichung.

2. Verfahren nach Anspruch 1, wobei zur Ermittlung des Kunden-Preises eine Differenz zwischen dem Standardpreis für die Bestellung und der Abweichung gebildet wird.

3. Verfahren nach Anspruch 1 oder 2, wobei zur Ermittlung des Kunden-Preises für die Bestellung zusätzliche kundenspezifische Daten berücksichtigt werden, insbesondere die Bestellmenge, die Bestellmenge pro Jahr oder die Gesamtbestellmenge.

4. Verfahren nach Anspruch 1, 2 oder 3, wobei zur Ermittlung des Preises der ähnlichen Bestellung eine zeitliche Änderung der Standardpreise berücksichtigt wird.

5. Verfahren nach einem der vorhergehenden Ansprüche, wobei für die Suche nach einer früheren Bestellung mit ähnlichen Bestellparametern für jeden der Parameter Cluster von Instanzen des Parameters gebildet werden.

6. Verfahren nach Anspruch 5, bei dem zur Suche nach einer früheren Bestellung mit ähnlichen Bestellparametern die Bestellparameter der Bestellung je einem Cluster der entsprechenden Bestellparameter zugeordnet werden und eine frühere Bestellung mit dem selben Cluster-Profil gesucht wird.

7. Verfahren nach Anspruch 6, wobei es für den Fall, dass keine frühere Bestellung mit dem selben Cluster-Profil gefunden wird, nach einer früheren Bestellung mit einem ähnlichen Cluster-Profil gesucht wird, wobei Abweichungen von Cluster-Zuordnungen der früheren Bestellung und der Bestellung mit unterschiedlichen Gewichtungen versehen werden können.

8. Verfahren nach Anspruch 7, wobei entschieden wird, dass wenn die Summe der Gewichtungen von Abweichungen einen vorbestimmten Schwellwert überschreiten, keine frühere Bestellung mit ähnlichen Bestellparametern vorliegt.

9. Verfahren nach einem der vorhergehenden Ansprüche, wobei für den Fall, dass keine frühere Bestellung mit ähnlichen Bestellparametern gefunden wird, eine Nachricht, insbesondere eine E-Mail, an den Kunden generiert wird.

10. Verfahren nach Anspruch 9, wobei zur Generierung der Nachricht an den Kunden auf eine Vertriebsdatenbank zugegriffen wird, um den Vertriebskontakt für den Kunden zu ermitteln.

11. Verfahren nach einem der vorhergehenden Ansprüche, wobei der ermittelte Kunden-Preis mit einem Mindestpreis verglichen wird, und für den Fall, dass der zuvor ermittelte Kunden-Preis kleiner als der Mindestpreis ist, der Kunden-Preis auf den Mindestpreis heraufgesetzt wird.

12. Verfahren nach einem der vorhergehenden Ansprüche, wobei es sich bei den Bestellparametern um einen oder mehrere der folgenden Parameter handelt: Produktfamilie, Produkttyp, Produktvariante, Produktfarbe, Produktverpackung.

13. Verfahren nach einem der vorhergehenden Ansprüche, wobei die Standardpreise in Abhängigkeit von der Region und / oder der Branche ermittelt werden.

14. Computersystem zur automatischen Ermittlung eines Kunden-Preises für eine Bestellung mit Bestellparametern mit
- Mitteln (8) zur Suche nach einer früheren Bestellung mit ähnlichen Bestellparametern,
- Mitteln (7) zur Ermittlung eines Standardpreises für die ähnliche Bestellung,
- Mitteln zur Ermittlung der Abweichung des Preises der ähnlichen Bestellung von dem Standardpreis der ähnlichen Bestellung,
- Mitteln zur Ermittlung des Standardpreises für die Bestellung,
- Mitteln zur Ermittlung eines Kunden-Preises für die Bestellung unter Berücksichtigung der Abweichung.

15. Computersystem nach Anspruch 14 mit
- einem Servercomputer, der über ein Computernetzwerk, insbesondere das Internet, mit einem Client Computer (1) kommunizieren kann,
- mit einer ersten Datenbank (6) zur Speicherung einer Kunden-Historie von früheren Bestellungen mit den entsprechenden Bestellparametern,
- einer zweiten Datenbank (7) zur Ermittlung eines Standardpreises in Abhängigkeit von den Bestellparametern.

16. Computersystem nach Anspruch 14 oder 15 mit
- einer dritten Datenbank (8) zur Speicherung von Parameterclustern.

17. Computersystem nach Anspruch 16, bei dem die dritte Datenbank zur Speicherung von Parameterclustern Gewichtungen zur Bewertung der Abweichung des Cluster-Profils der Bestellung von einer früheren Bestellung aufweist.

18. Computersystem nach einem der Ansprüche 14 bis 17, mit einer vierten Datenbank zur Speicherung von kundenspezifischen Parametern, insbesondere einer Preisdegression in Abhängigkeit von der Bestellmenge, der Bestellmenge pro Jahr und/oder der produktübergreifenden Gesamtbestellmenge.

19. Computersystem nach einem der Ansprüche 14 bis 18 mit Mitteln zur Ermittlung eines Mindestpreises zur Erreichung einer Mindestrendite für die Bestellung.

20. Computersystem nach einem der Ansprüche 14 bis 19 mit einer vierten Datenbank zur Speicherung einer Zuordnung der Lokation des Kunden und eines Vertriebskontakts.

21. Computerprogrammprodukt auf einem computerlesbaren Medium mit computerlesbaren Programmmitteln zur Ausführung eines Verfahrens nach einem der vorhergehenden Ansprüche 1 bis 13, wenn das Programm auf einem Computer ausgeführt wird.
